# EUROPEAN PATENT SPECIFICATION

(11) **EP 4 030 046 B1**
(45) Date of publication and mention of the grant of the patent: **22.05.2024**
(21) Application number: 22150807.0
(22) Date of filing: 10.01.2022
(51) Int. Cl.: F02K 9/46, F02K 9/58, F02K 9/94, F02K 9/95, F02K 9/97

(54) **MULTI-TIME IGNITION STARTING APPARATUS FOR A ROCKET ENGINE, AND ROCKET ENGINE HAVING SAME**
MEHRZEITZÜNDUNGSSTARTVORRICHTUNG FÜR EIN RAKETENTRIEBWERK UND RAKETENTRIEBWERK DAMIT
APPAREIL DE DÉMARRAGE À ALLUMAGE MULTIPLE POUR UN MOTEUR DE FUSÉE ET MOTEUR DE FUSÉE LE COMPORTANT

(30) Priority: 18.01.2021 CN 202110059468
(43) Date of publication of application: 20.07.2022
(73) Proprietor: Beijing Interstellar Glory Space Technology Co., Ltd., Beijing 100032 (CN); Beijing Interstellar Glory Technology LLC, Beijing 100176 (CN)
(72) Inventor: YU, Xinyu, Beijing, 100032 (CN); PENG, Xiaobo, Beijing, 100032 (CN); ZHANG, Xi, Beijing, 100032 (CN); YE, Hanyu, Beijing, 100032 (CN); ZHANG, Zhihao, Beijing, 100032 (CN)
(74) Representative: Hertin und Partner Rechts- und Patentanwälte PartG mbB

(56) References cited:
- CN-A- 110 005 546
- US-A1- 2019 032 605
- US-B2- 6 470 670

## Description

### Technical Field

The present invention relates to the field of space propulsion technology, and in particular, to a multi-time ignition starting apparatus for a rocket engine and a rocket engine having the same.

### Background

Before a pump-fed rocket engine reaches a stable working state, it needs to start a turbopump so that the turbopump rotates. Generally, a rocket with few operation times (1-2 times) use gas generated by gunpowder or uses high-pressure gas to blow a turbine so that the turbopump starts rotating and reaches a certain speed, after which the turbopump can supply energy for itself to achieve stable operation. In this mode, one piece of starting powder or high-pressure gas in one gas cylinder is consumed at each time of starting, and the number of starting times is limited due to the limitation of the installation number. In addition, for non-hypergolic propellants, combustion apparatuses such as a thrust chamber and a gas generator of the engine can operate only after an ignition device ignites two propellants. Generally, a gunpowder igniter or a torch igniter is adopted, but similar to the starting described above, one gunpowder igniter is consumed at each time of ignition, and the number of ignition times of the torch igniter is also limited by the capacity of an ignition fuel container. None of the above-mentioned pump-fed rocket engines can achieve multiple repeated starts. This is not a problem for previous single-use carrier rockets. However, for a future reusable carrier rocket, in the case of starting by gunpowder, multiple gunpowder starters must be provided, which leads to a complicated structure; and in the case of starting by a gas cylinder, due to a drop of a cylinder pressure or inconsistent filling conditions each time, the starting state varies, which may cause starting problems.

For this reason, two pump bodies are used in the prior art to communicate with an oxidizer outlet and a fuel outlet of the turbopump, respectively, to convey both an oxidizer and a fuel output from the turbopump to the gas generator to achieve multiple repeated starts of the rocket engine. However, due to the arrangement of the two pump bodies for the above apparatus, not only is the weight of the whole apparatus increased, but also the whole apparatus is complicated in structure and low in reliability.

CN110005546A is an example of the background art and discloses a repeated starting rocket engine in which an oxidizing agent and fuel are led out of the rear end of a turbopump, a generator is ignited to generate flue gas at a certain pressure so as to drive the turbopump to rotate, and repeated starting of the rocket engine is achieved.

US2019032605A1 is a further example of the background art and discloses an electric power-assisted liquid-propellant rocket propulsion system including: a pre-burner for generating combustion gas of a fuel and an oxidant; a main combustor for burning mixed gas of the fuel and the combustion gas discharged from the pre-burner; a turbopump including a turbine rotated by a flow of the combustion gas and a first pump and a second pump driven by a rotation of the turbine, the turbopump supplying the fuel from a fuel tank to the pre-burner and supplying the oxidant from an oxidant tank to the pre-burner and the main combustor; an electric motor for rotating the turbine before combustion of the pre-burner and the main combustor; and a clutch for connecting the electric motor and the turbine and releasing the connection between the electric motor and the turbine.

### Summary

Therefore, a technical problem to be solved by the present invention is to overcome the shortcomings of a heavy weight, a complex structure and low reliability of a multi-time ignition starting apparatus for a rocket engine in the prior art, and thus provides a multi-time ignition starting apparatus for a rocket engine with a light weight, a simple structure and high reliability and a rocket engine having the same.

To solve the above-mentioned technical problem, the present invention provides a multi-time ignition starting apparatus for a rocket engine, the apparatus including:
a thrust chamber with a first inlet and a first outlet;
a generator with a second inlet and a second outlet;
a turbopump assembly communicated with the second outlet of the generator, having a fuel inlet, an oxidizer inlet, a fuel outlet and an oxidizer outlet, both the fuel outlet and the oxidizer outlet being concurrently communicated with both the first inlet and the second inlet; and
a fuel tank and an oxidizer tank, both having outlets concurrently communicated with both the first inlet and the second inlet, the fuel tank being also communicated with the first outlet of the thrust chamber through a first pipeline to fill a gasified fuel, after being heated and gasified by the thrust chamber, from the thrust chamber into the fuel tank.

Optionally, the first pipeline is provided with a first valve.

The turbopump assembly includes a turbine, a fuel pump and an oxidizer pump which are arranged coaxially, the oxidizer pump being connected to the oxidizer inlet and oxidizer outlet, respectively, and the oxidizer outlet being communicated with an inlet of the oxidizer tank through a second pipeline, the second pipeline being provided with a heat exchanger to heat and gasify an oxidizer output from the oxidizer pump and fill the gasified oxidizer into the oxidizer tank.

Optionally, the second pipeline is provided with a second valve.

Optionally, the oxidizer outlet is also communicated with the first inlet of the thrust chamber through a third pipeline and communicated with the second inlet of the generator through a fourth pipeline, the third pipeline being provided with a third valve, and the fourth pipeline being provided with a fourth valve.

Optionally, the fuel pump is connected to the fuel inlet and fuel outlet, respectively, and the fuel outlet is communicated with the first inlet of the thrust chamber through a fifth pipeline and communicated with the second inlet of the generator through a sixth pipeline, the fifth pipeline being provided with a fifth valve, and the sixth pipeline being provided with a sixth valve.

Optionally, the fuel inlet is communicated with a liquid fuel reservoir, and the oxidizer inlet is communicated with a liquid oxidizer reservoir.

Optionally, an outlet of the fuel tank is provided with a seventh valve, and an outlet of the oxidizer tank is provided with an eighth valve.

Optionally, a first igniter is provided at the first inlet of the thrust chamber, and a second igniter is provided at the second inlet of the generator.

A rocket engine is also provided, which includes the multi-time ignition starting apparatus for a rocket engine in the present invention.

The technical solutions of the present invention have the following advantages:
1. According to the multi-time ignition starting apparatus for a rocket engine provided in the present invention, when the engine is started for the first time, gas is supplied to the thrust chamber and the generator through the fuel tank and oxidizer tank, respectively, and after the gas in the generator is ignited, the turbopump assembly is driven to rotate to provide the pressurized liquid fuel and liquid oxidizer to the thrust chamber and the generator, thereby achieving the first-time ignition starting of the engine; and after the engine works normally, the thrust chamber heats and gasifies the entering liquid fuel, and the gasified fuel is filled into the fuel tank through the first pipeline to ensure that the engine can be repeatedly started by ignition multiple times, and the whole apparatus has a simple structure, a light weight and high reliability.
2. In the multi-time ignition starting apparatus for a rocket engine provided in the present invention, the oxidizer outlet is communicated with the inlet of the oxidizer tank through the second pipeline and the heat exchanger, so that the oxidizer output from the oxidizer pump is filled into the oxidizer tank after being heated and gasified, to ensure continuous supply of the oxidizer and achieve repeated multiple-time ignition starting of the engine.
3. In the multi-time ignition starting apparatus for a rocket engine provided in the present invention, the arrangement of the plurality of valves achieves that the opening and closing of the pipelines can be controlled according to needs to meet the needs of use.

### Brief Description of the Drawings

To describe the technical solutions in the embodiments of the present invention or in the prior art more clearly, a simple introduction of the accompanying drawings used in the description of the embodiments or the prior art is given below. Obviously, the accompanying drawings in the description below are merely some of the embodiments of the present invention, based on which other drawings may be obtained by those of ordinary skill in the art without creative work.

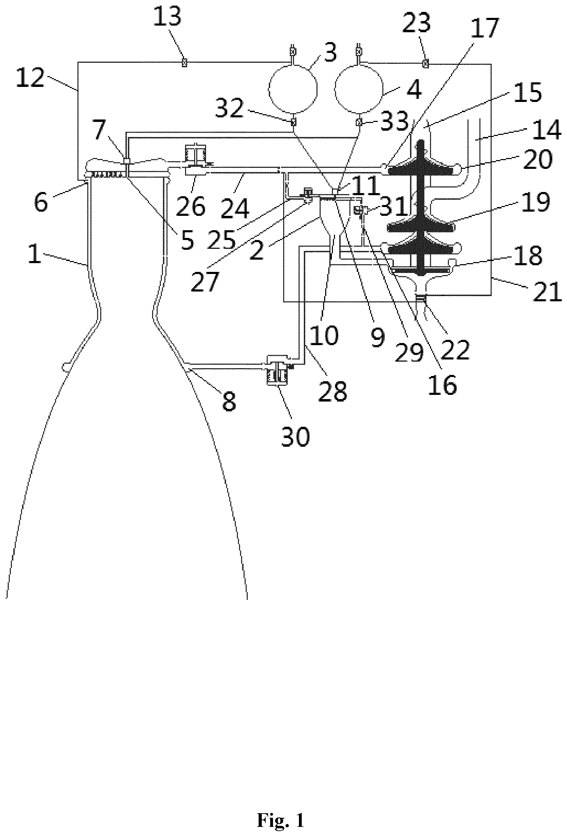

Fig. 1 is a schematic diagram of a multi-time ignition starting apparatus for a rocket engine provided in the present invention.

### Reference numerals:

1, thrust chamber; 2, generator; 3, fuel tank; 4, oxidizer tank; 5, first inlet; 6, first outlet; 7, first igniter; 8, opening; 9, second inlet; 10, second outlet; 11, second igniter; 12, first pipeline; 13, first valve; 14, fuel inlet; 15, oxidizer inlet; 16, fuel outlet; 17, oxidizer outlet; 18, turbine; 19, fuel pump; 20, oxidizer pump; 21, second pipeline; 22, heat exchanger; 23, second valve; 24, third pipeline; 25, fourth pipeline; 26, third valve; 27, fourth valve; 28, fifth pipeline; 29, sixth pipeline; 30, fifth valve; 31, sixth valve; 32, seventh valve; 33, eighth valve.

### Detailed Description of the Embodiments

Technical solutions of the present invention will be described below clearly and completely in conjunction with the accompanying drawings. Obviously, the described embodiments are part of, instead of all of embodiments of the present invention. All other embodiments obtained by those of ordinary skill in the art without creative work, based on the embodiments in the present invention, fall into the protection scope of the present invention.

In addition, technical features involved in different embodiments of the present invention described below may be combined with each other so long as they do not conflict with each other.

In a specific implementation of a multi-time ignition starting apparatus for a rocket engine shown in Fig. 1, with methane as a fuel and oxygen as an oxidizer as an example, the apparatus includes a thrust chamber 1, a generator 2, a turbopump assembly, a fuel tank 3, and an oxidizer tank 4.

The thrust chamber 1 is provided with a first inlet 5 and a first outlet 6 at the top. A first igniter 7 is provided at the first inlet 5, and an opening 8 communicated with the first inlet 5 is formed at a side wall of the thrust chamber.

The generator 2 is provided with a second inlet 9 at the top and a second outlet 10 at the bottom. A second igniter 11 is provided at the second inlet 9.

The fuel tank 3 and the oxidizer tank 4 have capacities that meet the need of one-time starting of the engine and are filled on the ground before rocket flight. Both an outlet of the fuel tank 3 and an outlet of the oxidizer tank 4 are concurrently communicated with both the first inlet 5 and the second inlet 9. Gaseous methane is filled into the fuel tank 3 through an inlet thereof, and gaseous oxygen is filled into the oxidizer tank 4 through an inlet thereof. The fuel tank 3 is also communicated with the first outlet 6 of the thrust chamber 1 through a first pipeline 12, and the first pipeline 12 is provided with a first valve 13 to fill a gasified fuel from the thrust chamber 1 into the fuel tank 3 to achieve continuous gas supply.

The turbopump assembly is communicated with the second outlet 10 of the generator 2, and has a fuel inlet 14, an oxidizer inlet 15, a fuel outlet 16 and an oxidizer outlet 17. The turbopump assembly includes a turbine 18, a fuel pump 19 and an oxidizer pump 20 which are arranged coaxially from bottom to top. The oxidizer pump 20 is connected to the oxidizer inlet 15 and oxidizer outlet 17, respectively. The oxidizer inlet 15 is communicated with a liquid oxidizer reservoir to fill the oxidizer pump 20 with liquid oxygen, which is then pressurized by the oxidizer pump 20 and output; and the oxidizer outlet 17 is communicated with the inlet of the oxidizer tank 4 through a second pipeline 21, the second pipeline 21 being provided with a heat exchanger 22 and a second valve 23 to heat and gasify the liquid oxygen output from the oxidizer pump 20 and fill the gasified oxygen into the oxidizer tank 4 to achieve continuous gas supply. The oxidizer outlet 17 is also communicated with the first inlet 5 of the thrust chamber 1 through a third pipeline 24 and communicated with the second inlet 9 of the generator 2 through a fourth pipeline 25, the third pipeline 24 being provided with a third valve 26, and the fourth pipeline 25 being provided with a fourth valve 27.

The fuel pump 19 is connected to the fuel inlet 14 and fuel outlet 16, respectively. The fuel inlet 14 is communicated with a liquid fuel reservoir to fill the fuel pump 19 with liquid methane, which is then pressurized by the fuel pump 19 and output; and the fuel outlet 16 is communicated with the opening 8 and the first inlet 5 of the thrust chamber 1 through a fifth pipeline 28 and communicated with the second inlet 9 of the generator 2 through a sixth pipeline 29, the fifth pipeline 28 being provided with a fifth valve 30, and the sixth pipeline 29 being provided with a sixth valve 31.

To facilitate control of the flow of gaseous methane and oxygen filled into the thrust chamber 1 and generator 2 from the fuel tank 3 and oxidizer tank 4, an outlet of the fuel tank 3 is provided with a seventh valve 32, and an outlet of the oxidizer tank 4 is provided with an eighth valve 33.

A rocket engine is also provided, which includes the multi-time ignition starting apparatus for a rocket engine.

To start the engine for the first time, at first, gaseous methane is filled into the fuel tank 3 through the inlet thereof, and gaseous oxygen is filled into the oxidizer tank 4 through the inlet thereof. Then, the seventh valve 32 and the eighth valve 33 are turned on, so that the gaseous methane in the fuel tank 3 enters a first igniter 7 of the thrust chamber 1 and the gaseous oxygen in the oxidizer tank 4 enters a second igniter 11 of the generator 2; the second igniter 11 sparks to produce high-temperature gas, which enters the turbine 18 through the second outlet 10 and drives the turbine 18 to rotate, which in turn causes the fuel pump 19 and the oxidizer pump 20 to rotate; the fuel pump 19 and oxidizer pump 20 increase the pressure of the liquid methane filled through the fuel inlet 14 and the pressure of the liquid oxygen filled through the oxidizer inlet 15; the high-pressure liquid methane enters the thrust chamber 1 through the fifth pipeline 28 and enters the generator 2 through the sixth pipeline 29, and the high-pressure liquid oxygen enters the thrust chamber through the third pipeline 24 and enters the generator through the fourth pipeline 25; the liquid methane and the liquid oxygen entering the generator 2 are ignited by the high-temperature gas generated by the second igniter 11 to achieve ignition of the generator 2; and the liquid methane and the liquid oxygen entering the thrust chamber 1 are ignited by high-temperature gas produced by the first igniter 7 to achieve ignition of the thrust chamber 1, thus achieving first-time ignition starting of the engine.

After the engine operates normally, the thrust chamber 1 heats and gasifies the entering liquid methane and fills the gasified methane into the fuel tank through the first pipeline 12 to replenish the fuel tank 3 for use in the next-time ignition start. At the same time, the liquid oxygen in the oxidizer pump 20 enters the heat exchanger 22 through the oxidizer outlet 17 and is heated and gasified therein, and then filled into the oxidizer tank 4 through the second pipeline 21 to replenish the oxidizer tank 4 for use in the next-time ignition start, thus achieving multi-time ignition starting of the rocket engine.

Obviously, the embodiments described above are merely examples for clear description, and are not intended to limit the implementations. Other variations or modifications of the various forms may also be made by those skilled in the art based on the above description. There is no need and no way to describe all implementations in an exhaustive manner here. Obvious variations or modifications derived therefrom are still within the protection scope of the invention-creation insofar as they fall under the subject matter of the appended claims.

## Claims

1. A multi-time ignition starting apparatus for a rocket engine, comprising:
a thrust chamber (1) with a first inlet (5) and a first outlet (6);
a generator (2) with a second inlet (9) and a second outlet (10);
a turbopump assembly communicated with the second outlet (10) of the generator (2), having a fuel inlet (14), an oxidizer inlet (15), a fuel outlet (16) and an oxidizer outlet (17), both the fuel outlet (16) and the oxidizer outlet (17) being concurrently communicated with both the first inlet (5) and the second inlet (9); and
a fuel tank (3) and an oxidizer tank (4), both having outlets concurrently communicated with both the first inlet (5) and the second inlet (9), the fuel tank (3) being also communicated with the first outlet (6) of the thrust chamber (1) through a first pipeline (12) to fill a gasified fuel, after being heated and gasified by the thrust chamber (1), from the thrust chamber (1) into the fuel tank (3);
wherein the turbopump assembly comprises a turbine (18), a fuel pump (19) and an oxidizer pump (20) which are arranged coaxially, the oxidizer pump (20) being connected to the oxidizer inlet (15) and the oxidizer outlet (17), respectively, and the oxidizer outlet (17) being communicated with an inlet of the oxidizer tank (4) through a second pipeline (21), the second pipeline (21) being provided with a heat exchanger (22) to heat and gasify an oxidizer output from the oxidizer pump (20) and fill the gasified oxidizer into the oxidizer tank (4).

2. The multi-time ignition starting apparatus for a rocket engine according to claim 1, wherein the first pipeline (12) is provided with a first valve (13).

3. The multi-time ignition starting apparatus for a rocket engine according to claim 1, wherein the second pipeline (21) is provided with a second valve (23).

4. The multi-time ignition starting apparatus for a rocket engine according to claim 3, wherein the oxidizer outlet (17) is also communicated with the first inlet (5) of the thrust chamber (1) through a third pipeline (24) and communicated with the second inlet (9) of the generator (2) through a fourth pipeline (25), the third pipeline (24) being provided with a third valve (26), and the fourth pipeline (25) being provided with a fourth valve (27).

5. The multi-time ignition starting apparatus for a rocket engine according to claim 1, 3 or 4, wherein the fuel pump (19) is connected to the fuel inlet (14) and fuel outlet (16), respectively, and the fuel outlet (16) is communicated with the first inlet (5) of the thrust chamber (1) through a fifth pipeline (28) and communicated with the second inlet (9) of the generator (2) through a sixth pipeline (29), the fifth pipeline (28) being provided with a fifth valve (30), and the sixth pipeline (29) being provided with a sixth valve (31).

6. The multi-time ignition starting apparatus for a rocket engine according to any one of claims 1-4, wherein the fuel inlet (14) is communicated with a liquid fuel reservoir, and the oxidizer inlet (15) is communicated with a liquid oxidizer reservoir.

7. The multi-time ignition starting apparatus for a rocket engine according to any one of claims 1-4, wherein an outlet of the fuel tank (3) is provided with a seventh valve (32), and an outlet of the oxidizer tank (4) is provided with an eighth valve (33).

8. The multi-time ignition starting apparatus for a rocket engine according to any one of claims 1-4, wherein a first igniter (7) is provided at the first inlet (5) of the thrust chamber (1), and a second igniter (11) is provided at the second inlet (9) of the generator (2).

9. A rocket engine, comprising the multi-time ignition starting apparatus for a rocket engine according to any one of claims 1-8.

## Patentansprüche

1. Startvorrichtung mit Mehrfachzündung für ein Raketentriebwerk, umfassend:
eine Schubkammer (1) mit einem ersten Einlass (5) und einem ersten Auslass (6);
einen Generator (2) mit einem zweiten Einlass (9) und einem zweiten Auslass (10);
eine Turbopumpenanordnung, die mit dem zweiten Auslass (10) des Generators (2) in Verbindung steht und einen Kraftstoffeinlass (14), einen Oxidationsmitteleinlass (15), einen Kraftstoffauslass (16) und einen Oxidationsmittelauslass (17) aufweist, wobei sowohl der Kraftstoffauslass (16) als auch der Oxidationsmittelauslass (17) gleichzeitig mit dem ersten Einlass (5) und dem zweiten Einlass (9) in Verbindung stehen; und einen Kraftstofftank (3) und einen Oxidationsmitteltank (4),
wobei beide Auslässe aufweisen, die gleichzeitig mit dem ersten Einlass (5) und dem zweiten Einlass (9) in Verbindung stehen, wobei der Kraftstofftank (3) auch mit dem ersten Auslass (6) der Schubkammer (1) durch eine erste Rohrleitung (12) in Verbindung steht, um einen vergasten Kraftstoff, nachdem er durch die Schubkammer (1) erhitzt und vergast wurde, aus der Schubkammer (1) in den Kraftstofftank (3) einzufüllen;
wobei die Turbopumpenanordnung eine Turbine (18), eine Kraftstoffpumpe (19) und eine Oxidationsmittelpumpe (20) umfasst, die koaxial angeordnet sind, wobei die Oxidationsmittelpumpe (20) mit dem Oxidationsmitteleinlass (15) bzw. dem Oxidationsmittelauslass (17) in Verbindung steht und der Oxidationsmittelauslass (17) über eine zweite Rohrleitung (21) mit einem Einlass des Oxidationsmitteltanks (4) in Verbindung steht, wobei die zweite Rohrleitung (21) mit einem Wärmetauscher (22) zum Erhitzen und Vergasen eines Oxidationsmittelausgangs von der Oxidationsmittelpumpe (20) und zum Füllen des vergasten Oxidationsmittels in den Oxidationsmitteltank (4) bereitgestellt ist.

2. Startvorrichtung mit Mehrfachzündung für ein Raketentriebwerk nach Anspruch 1, wobei die erste Rohrleitung (12) mit einem ersten Ventil (13) bereitgestellt ist.

3. Startvorrichtung mit Mehrfachzündung für ein Raketentriebwerk nach Anspruch 1, wobei die zweite Rohrleitung (21) mit einem zweiten Ventil (23) bereitgestellt ist.

4. Startvorrichtung mit Mehrfachzündung für ein Raketentriebwerk nach Anspruch 3, wobei der Oxidationsmittelauslass (17) auch über eine dritte Rohrleitung (24) mit dem ersten Einlass (5) der Schubkammer (1) in Verbindung steht und über eine vierte Rohrleitung (25) mit dem zweiten Einlass (9) des Generators (2) in Verbindung steht, wobei die dritte Rohrleitung (24) mit einem dritten Ventil (26) und die vierte Rohrleitung (25) mit einem vierten Ventil (27) bereitgestellt ist.

5. Startvorrichtung mit Mehrfachzündung für ein Raketentriebwerk nach Anspruch 1, 3 oder 4, wobei die Kraftstoffpumpe (19) mit dem Kraftstoffeinlass (14) bzw. Kraftstoffauslass (16) und der Kraftstoffauslass (16) über eine fünfte Rohrleitung (28) mit dem ersten Einlass (5) der Schubkammer (1) und über eine sechste Rohrleitung (29) mit dem zweiten Einlass (9) des Generators (2) in Verbindung steht, wobei die fünfte Rohrleitung (28) mit einem fünften Ventil (30) und die sechste Rohrleitung (29) mit einem sechsten Ventil (31) bereitgestellt ist.

6. Startvorrichtung mit Mehrfachzündung für ein Raketentriebwerk nach einem der Ansprüche 1-4, wobei der Kraftstoffeinlass (14) mit einem Flüssigkraftstoffreservoir und der Oxidationsmitteleinlass (15) mit einem Flüssigoxidationsmittelreservoir in Verbindung steht.

7. Startvorrichtung mit Mehrfachzündung für ein Raketentriebwerk nach einem der Ansprüche 1-4, wobei ein Auslass des Kraftstofftanks (3) mit einem siebten Ventil (32) bereitgestellt ist und ein Auslass des Oxidationsmitteltanks (4) mit einem achten Ventil (33) bereitgestellt ist.

8. Startvorrichtung mit Mehrfachzündung für ein Raketentriebwerk nach einem der Ansprüche 1-4, wobei ein erster Zünder (7) am ersten Einlass (5) der Schubkammer (1) und ein zweiter Zünder (11) am zweiten Einlass (9) des Generators (2) bereitgestellt ist.

9. Raketentriebwerk, umfassend die Startvorrichtung mit Mehrfachzündung für ein Raketentriebwerk nach einem der Ansprüche 1-8.

## Revendications

1. Appareil de démarrage à allumage multiple pour un moteur de fusée, comprenant :
une chambre de poussée (1) dotée d'une première entrée (5) et d'une première sortie (6) ;
un générateur (2) doté d'une seconde entrée (9) et d'une seconde sortie (10) ;
un ensemble turbopompe, communiquant avec la seconde sortie (10) du générateur (2), comportant une entrée de carburant (14), une entrée de comburant (15), une sortie de carburant (16) et une sortie de comburant (17), la sortie de carburant (16) et la sortie de comburant (17), toutes deux en communication simultanée avec à la fois, la première entrée (5) et la seconde entrée (9) ; et
un réservoir de carburant (3) et un réservoir de comburant (4), tous deux comportant des sorties communiquant simultanément avec, à la fois, la première entrée (5) et la seconde entrée (9), le réservoir de carburant (3) étant également en communication avec la première sortie (6) de la chambre de poussée (1) à travers une première conduite (12) pour remplir un carburant gazéifié, après avoir été chauffé et gazéifié par la chambre de poussée (1), depuis la chambre de poussée (1) dans le réservoir de carburant (3) ;
dans lequel l'ensemble turbopompe comprend une turbine (18), une pompe à carburant (19) et une pompe à comburant (20) qui sont disposées coaxialement, la pompe à comburant (20) étant reliée à l'entrée de comburant (15) et à la sortie de comburant (17), respectivement, et la sortie de comburant (17) étant en communication avec une entrée du réservoir de comburant (4) à travers une deuxième conduite (21), la deuxième conduite (21) étant dotée d'un échangeur de chaleur (22) pour chauffer et gazéifier un comburant sortant de la pompe à comburant (20) et remplir le comburant gazéifié dans le réservoir de comburant (4) .

2. Appareil de démarrage à allumage multiple pour un moteur de fusée selon la revendication 1, dans lequel la première conduite (12) est dotée d'une première vanne (13).

3. Appareil de démarrage à allumage multiple pour un moteur de fusée selon la revendication 1, dans lequel la deuxième conduite (21) est dotée d'une deuxième vanne (23).

4. Appareil de démarrage à allumage multiple pour un moteur de fusée selon la revendication 3, dans lequel la sortie de comburant (17) est également en communication avec la première entrée (5) de la chambre de poussée (1) à travers une troisième conduite (24) et en communication avec la seconde entrée (9) du générateur (2) à travers une quatrième conduite (25), la troisième conduite (24) étant dotée d'une troisième vanne (26), et la quatrième conduite (25) étant dotée d'une quatrième vanne (27) .

5. Appareil de démarrage à allumage multiple pour un moteur de fusée selon la revendication 1, 3 ou 4, dans lequel la pompe à carburant (19) est reliée à l'entrée de carburant (14) et à la sortie de carburant (16), respectivement, et la sortie de carburant (16) est en communication avec la première entrée (5) de la chambre de poussée (1) à travers une cinquième conduite (28) et est en communication avec la seconde entrée (9) du générateur (2) à travers une sixième conduite (29), la cinquième conduite (28) étant dotée d'une cinquième vanne (30), et la sixième conduite (29) étant dotée d'une sixième vanne (31).

6. Appareil de démarrage à allumage multiple pour un moteur de fusée selon l'une quelconque des revendications 1 à 4, dans lequel l'entrée de carburant (14) est en communication avec un réservoir de carburant liquide, et l'entrée de comburant (15) est en communication avec un réservoir de carburant liquide.

7. Appareil de démarrage à allumage multiple pour un moteur de fusée selon l'une quelconque des revendications 1 à 4, dans lequel une sortie du réservoir de carburant (3) est dotée d'une septième vanne (32), et une sortie du réservoir de comburant (4) est dotée d'une huitième vanne (33).

8. Appareil de démarrage à allumage multiple pour un moteur de fusée selon l'une quelconque des revendications 1 à 4, dans lequel un premier allumeur (7) est disposé au niveau de la première entrée (5) de la chambre de poussée (1), et un second allumeur (11) est disposé au niveau de la seconde entrée (9) du générateur (2).

9. Moteur de fusée, comprenant l'appareil de démarrage à allumage multiple pour un moteur de fusée selon l'une quelconque des revendications 1 à 8.
